# EUROPÄISCHE PATENTSCHRIFT

(11) **EP 2 290 004 B1**
(45) Veröffentlichungstag und Bekanntmachung des Hinweises auf die Patenterteilung: **31.08.2016**
(21) Anmeldenummer: 10165021.6
(22) Anmeldetag: 04.06.2010
(51) Int. Cl.: C08L 77/02, C08L 77/06, F16L 11/04, F16L 9/127, C08L 23/20

(54) **Polyamid-Blend-Formmasse**
Polyamide blend moulding material
Matériau de moulage à base d'un mélange de polyamides

(30) Priorität: 31.07.2009 EP 09167002
(43) Veröffentlichungstag der Anmeldung: 02.03.2011
(73) Patentinhaber: EMS-PATENT AG, 7013 Domat / Ems (CH)
(72) Erfinder: Hoffmann, Botho, 7013, Domat/Ems (CH); Kettl, Ralph, 7417, Paspels (CH)
(74) Vertreter: OK pat AG

(56) Entgegenhaltungen:
- EP-A1- 1 884 356
- EP-A1- 1 942 296
- DE-A1-102004 054 390
- US-A1- 2002 173 596
- US-A1- 2002 179 888
- WALTER CASERI: 'PEBA' ROEMPP, [Online] 01 April 2007, XP055079548 Gefunden im Internet: <URL:http://www.roempp.com> [gefunden am 2013-09-17]

## Beschreibung

Die Erfindung betrifft gemäss dem Oberbegriff des unabhängigen Anspruchs 1 eine Polyamid-Blend-Formmasse mit einem Polyamid-Blend-Anteil und mindestens einer Schlagzähkomponente. Derartige Formmassen sind unter anderem zur Herstellung von Leitungen in Industrie- und Automobilanwendungen, bevorzugt für Vakuumleitungen und besonders bevorzugt für Bremskraftverstärker-Leitungen geeignet.

Kunststoffrohre aus Polyamid sind bekannt und werden sehr vielseitig im Fahrzeugbau zum Beispiel für Brems-, Hydraulik-, Kraftstoff-, Kühl-, und Pneumatikleitungen eingesetzt (vgl. DIN 73378: "Rohre aus Polyamid für Kraftfahrzeuge"). Polyamid-Blend-Formmassen mit einem Polyamid-Blend-Anteil und einer Schlagzähkomponente sind aus der Patentanmeldung EP 1 942 296 A1 in Bezug auf die Herstellung von Hydraulikleitungen, insbesondere Kupplungs-Leitungen, bekannt.

Im Kraftfahrzeugbau eingesetzte Kunststoffrohre oder -leitungen müssen eine Vielzahl von Anforderungen erfüllen. Für den Fall einer Bremskraftverstärker-Leitung kann deren Funktionsweise folgendermassen beschrieben werden:
Zur Verringerung der zum Erreichen einer gewünschten Bremswirkung notwendigen Betätigungskraft, wird an der Bremse eines Fahrzeugs ein Bremskraftverstärker eingesetzt. Dies ist insbesondere dann notwendig, wenn Scheibenbremsen verwendet werden, weil die Betätigung der Scheibenbremsen eines Automobils mit dem Pedaldruck allein einen zu hohen Kraftaufwand erfordern würde. Bei den in Personenkraftwagen und leichten Nutzfahrzeugen vorwiegend verbauten Unterdruck-Bremskraftverstärkern wird die Hilfskraft mittels einer Druckdifferenz (Atmosphärendruck zu Unterdruck) erzeugt. Bei mittleren bis schweren Nutzfahrzeugen (in der Regel ab 7.49 t) wie z.B. Lastkraftwagen wird die Bremskraft mittels Druckluft, d.h. mittels einer Fremdkraftbremsanlage erzeugt; der Betriebsdruck liegt hier bei ca. 8 bar. Neben diesen pneumatischen sind auch hydraulische oder elektrische Bremskraftverstärker bekannt.

Kraftfahrzeuge mit klassischen Ottomotoren erfordern bei Teillast den Einsatz einer Drosselklappe, um ein brennfähiges Kraftstoff-Luftgemisch zu erzeugen. Als Nebeneffekt entsteht hinter der Drosselklappe im Ansaugtrakt (Ansaugkrümmer) ein Unterdruck. Bei pneumatischen Bremskraftverstärkern wird mit Hilfe des Ansaug-Unterdrucks oder einer Vakuumpumpe der Bremspedaldruck verstärkt. Bei aktuellen Ottomotoren mit Benzindirekteinspritzung, wie z.B. beim VW TSI, wird durch den systembedingten Entfall der Drosselklappe eine separate Saugpumpe bzw. Unterdruckpumpe (auch Vakuumpumpe) erforderlich, wie dies bei Dieselmotoren (die prinzipiell über keine Drosselklappe verfügen) auch der Fall ist. In der Verbindungsleitung zwischen Bremskraftverstärker und Unterdruckquelle ist ein Rückschlagventil eingebaut, das dazu dient, den Unterdruck bei Volllast und stehendem Motor aufrecht zu erhalten. Dieser Unterdruck stellt ein Druckgefälle gegenüber der Aussenluft dar, das sich im Bremskraftverstärker zur Erhöhung der Bremskraft ausnutzen lässt.

Das Vakuum bzw. der Unterduck wird üblicherweise mittels Rohrleitungen vom Vakuumerzeuger zu den Bremsen bzw. zum Bremskraftverstärker (BKV) gebracht. Damit diese eine einwandfreie Funktion des Bremskraftverstärkers bei allen möglichen Wetter- und Temperaturbedingungen gewährleistet, müssen von einer Bremskraftverstärker-Leitung unter anderem folgende Anforderungen erfüllt werden:
1) Werkstoffanforderungen an flexible Leitungen "TL 52655", Bremskraftverstärker-Leitungen (VOLKSWAGEN AG): Normaltemperaturbereich (Dauertemperatur T_{D} ≤ 120 °C); Hochtemperaturbereich (Dauertemperatur T_{D} ≤ 160 °C), genügende Festigkeit bis mindestens +150 °C (kurzfristig bis über +160°C). Andererseits müssen Bremskraftverstärker-Leitungen auch bei Temperaturen von -40 °C sicher funktionieren. Zudem wird verlangt, dass solche Bremskraftverstärker-Leitungen beständig gegen Ozon sind und einen wiederholten Klimawechsel (mit bis zu 20-60 Zyklen) ohne Rissbildung überstehen.
2) Worldwide Engineering Standards for Low Pressure Pipe Assembly for Brake Boosters "GMW14640" (GENERAL MOTORS): Typ A Normaltemperaturbereich -40 °C bis +110 °C (Spitzentemperatur bis +120 °C); Typ B Hochtemperaturbereich -40 °C bis +140 °C (Spitzentemperatur bis +150 °C). Dies gilt für die Leitungsdurchmesser 9 ± 0.15 x 1.5 ± 0.1 mm; 12 ± 0.15 x 1.5 ± 0.1 mm und 12.5 ± 0.15 x 1.25 ± 0.1 mm.
3) Liefervorschrift für Rohre aus Polyamid (PA) für den Niederdruckbereich "DBL 6270" (MERCEDES-BENZ): Die Rohre werden einer Wärmealterung über 1000 Stunden bei Lagertemperaturen von bis zu +150 °C unterzogen und dann nach ISO 179 bei 23 °C und -40 °C auf Schlagzähigkeit geprüft. Im Neuzustand der Rohre erfolgt eine Schlagzähigkeitsprüfung bei 23 °C; -40 °C und -50 °C. Die Berstdruckprüfung erfolgt nach DIN 53 758. Für Bremskraftverstärker-Leitung erfolgt eine Kennzeichnung nach DIN 73 378 sowie nach FMVSS106/74. Für Rohre im Bereich Druckluftbremsanlagen gelten zusätzlich die DIN 74 324-1 und die DIN 74 324-2. Für Rohre als Unterdruckleitung zum Betrieb von Bremskraftverstärkern gilt (ausser für Unimog) ergänzend die Produktspezifikation A116 000 66 99 und die Norm FMVSS 106.

Aus dem Stand der Technik sind ausserdem die Dokumente EP 1 329 481 A2 und DE 103 33 005 A1 bekannt. Beide befassen sich mit Leitungen für den Kraftfahrzeugbau, den Maschinen- und Apparatebau und die Medizintechnik. Im Speziellen befassen sich diese Dokumente mit der Herstellung von Unterdruckleitungen für Bremskraftverstärker, mit Lüftungsleitungen, Druckschläuchen, Druckluftleitungen, Steuerleitungen, Kühlmittelleitungen, Kraftstoffleitungen, Entlüftungsleitungen, Scheibenwaschanlageleitungen, Leitungen für hydraulische Kupplungssysteme, Servolenkungsleitungen, Klimaanlageleitungen, Kabel- oder Ader-Ummantelungen bzw. mit spritzgegossenen Teilen eines Ölfilters oder eines Kraftstofffilters. Dabei offenbart EP 1 329 481 A2 eine Formmasse, die 99.9 bis 95 Gew.-Teile eines Polyetheramids auf Basis eines linearen aliphatischen Diamins mit 6 bis 12 C-Atomen, einer linearen aliphatischen oder aromatischen Dicarbonsäure mit 6 bis 12 C-Atomen und eines Polyetherdiamins mit wenigstens 3 C-Atomen pro Ethersauerstoff und primären Aminogruppen an den Kettenenden enthält. Zu 100 Gew.-Teilen ergänzt wird diese Formmasse mit 0.1 bis 5 Gew.-Teilen eines Co-Polymeren aus unterschiedlichen chemischen Bausteinen.

DE 103 33 005 A1 offenbart eine Formmasse, die 97 bis 80 Gew.-Teile eines Polyetheramids auf Basis eines linearen aliphatischen Diamins mit 6 bis 14 C-Atomen, einer linearen aliphatischen oder aromatischen Dicarbonsäure mit 6 bis 14 C-Atomen und eines Polyetherdiamins mit wenigstens 3 C-Atomen pro Ethersauerstoff und primären Aminogruppen an den Kettenenden enthält. Zu 100 Gew.-Teilen ergänzt wird diese Formmasse mit 3 bis 20 Gew.-Teilen eines funktionelle Gruppen enthaltenden Kautschuks.

Aus dem Stand der Technik ist zudem das Produkt VESTAMID^{®} EX9350 schwarz bekannt (VESTAMID^{®} ist eine eingetragene Marke der EVONIK DEGUSSA GmbH). Dabei handelt es sich um ein hitze- und witterungsbeständiges, schlagzähmodifiziertes Polyamid 612-Elastomer für die Extrusionsverarbeitung z.B. bei der Herstellung von Rohrleitungen, wie etwa Bremskraftverstärker-Leitungen.

Aus M. Xanthos et al. 1996 "Impact Modification of Aromatic/Aliphatic Polyamide Blends: Effects of Composition and Processing Conditions" (Journal of Applied Polymer Science, Vol. 62: 1167-1177) sind Blends von aromatischen/aliphatischen Polyamiden mit unterschiedlicher Zusammensetzung bekannt. Offenbart wird eine Polyamid-Blend-Formmasse mit einem Polyamid-Anteil und mindestens einer Schlagzähkomponente, wobei diese Polyamid-Blend-Formmasse folgende Komponenten umfasst:
- 32 Gew.-% eines amorphen Polyamids (PA 6I/6T) mit durchschnittlich 6.5 C-Atomen pro Monomereinheit;
- 48 Gew.-% eines Polyamids (Nylon 6) auf Lactam- und/oder Aminocarbonsäure-Basis und mit durchschnittlich 6 C-Atomen pro Monomereinheit; und
- 20 Gew.-% eines mit Maleinsäureanhydrid funktionalisierten Ethylen/Propylen-Elastomers (EPX).

Aus dem Dokument US 5,928,738 ist eine Polyamid-Blend-Formmasse mit einem Polyamid-Blend-Anteil und mindestens einer Schlagzähkomponente bekannt, wobei die Polyamid-Blend-Formmasse folgende Komponenten umfasst:
- 30 Gew.-% eines Polyamids 6/12 (Grilon CF6S) mit durchschnittlich 9 C-Atomen pro Monomereinheit;
- 10 Gew.-% eines amorphen Polyamids 6I/6T;
- 50 Gew.-% eines Polyamids 6 auf Lactam- und/oder Aminocarbonsäure-Basis und mit durchschnittlich 6 C-Atomen pro Monomereinheit; und
- 10 Gew.-% Ethylen/Methacrylsäure-Elastomers.

Aus dem Dokument US 6,416,832 ist eine Polyamid-Blend-Formmasse mit einem Polyamid-Blend-Anteil und mindestens einer Schlagzähkomponente bekannt, wobei die Polyamid-Blend-Formmasse folgende Komponenten umfasst:
- 20 Gew.-% eines Polyamids 6/12/MXD6 mit durchschnittlich 7.75 C-Atomen pro Monomereinheit;
- 10 Gew.-% eines amorphen Polyamids;
- 50 Gew.-% eines Polyamids 6 auf Lactam- und/oder Aminocarbonsäure-Basis und mit durchschnittlich 6 C-Atomen pro Monomereinheit; und
- 20 Gew.-% Elastomere auf Polyethylen-Basis (AAE und PE).

Aus dem Dokument US 2005/0009976 A1 ist eine Polyamid-Blend-Formmasse mit einem Polyamid-Blend-Anteil und mindestens einer Schlagzähkomponente bekannt, wobei die Polyamid-Blend-Formmasse folgende Komponenten umfasst:
- 45 Gew.-% eines Polyamids MXD6 mit durchschnittlich 6.5 C-Atomen pro Monomereinheit;
- 25 Gew.-% eines amorphen Polyamids; und
- 30 Gew.-% eines Polyamids (PA6-NC2) auf Lactam- und/oder Aminocarbonsäure-Basis und mit durchschnittlich 6 C-Atomen pro Monomereinheit.

Aus dem Dokument US 2007/0089798 A1 ist eine Polyamid-Blend-Formmasse mit einem Polyamid-Anteil und mindestens einer Schlagzähkomponente bekannt, wobei die Polyamid-Blend-Formmasse folgende Komponenten umfasst:
- 50 Gew.-% eines Polyamids Polymetaxylylenadipamid (MXD6) mit durschnittlich 6.5 C-Atomen pro Monomereinheit; und
- 50 Gew.-% eines denaturierten Polyamids 6 mit durschnittlich 6 C-Atomen pro Monomereinheit mit einem Elastizitätsmodul von 830 MPa.

Aus dem Dokument US 2004/0259996 A1 ist das Herstellen einer Polyamid-Blend-Formmasse mit einem Polyamid-Anteil und mindestens einer Schlagzähkomponente bekannt, wobei die Polyamid-Blend-Formmasse Polyamide und Polyesteramide, nanoskalige und faserige Füllstoffe sowie Schlagzähmodifikatoren umfasst. Als Schlagzähmodifikatoren sind Ethylen-Propylen-Gummis (EPM) und Ethylen-Propylen-Dien-Gummis (EPDM) offenbart.

Aus dem Dokument JP 2001-329165 A ist eine verstärkte Polyamidzusammensetzung mit exzellenter Fliessfähigkeit beim Spritzgiessen mit kurzer Zykluszeit bekannt. Die verstärkte Polyamid Polyamidzusammensetzung führt zu starken warmgeklebten bzw. quellverschweissten Produkten und umfasst 96-99.9 Gew.-% eines kristallinen Polyamids, 0.1-4 Gew.-% eines teilamorphen Copolyamids mit zumindest zwei aromatischen Monomerkomponenten, und 5-200 Gewichtsteile eines anorganischen Füllers pro 100 Gewichtsteilen des Polyamidharzes.

Aus dem Dokument EP 1 942 296 A1 ist eine Formmasse auf der Basis von Polyamid bekannt, welche auf einer Mischung aus folgenden Bestandteilen aufgebaut ist:
- 45-97 Gew.-% eines Polyamids 610 mit durschnittlich 8 C-Atomen pro Monomereinheit;
- 0-30 Gew.-% eines amorphen und/oder mikrokristallinen Polyamids und/oder Copolyamids;
- 2-20 Gew.-% einer Schlagzähkomponente in Form eines Copolymers auf Basis von Ethylen und/oder Propylen; und
- 1-10 Gew.-% an Additiven.

Eine Aufgabe der vorliegenden Erfindung liegt darin, eine alternative Polyamid-Blend-Formmasse mit einem Polyamid-Blend-Anteil und einer Schlagzähkomponente vorzuschlagen, mit der Rohre herstellbar sind, welche zumindest vergleichbare Mess-Werte wie die mit den aus dem Stand der Technik bekannten Formmassen hergestellten Rohre liefern. Da für die bevorzugten Anwendungen eine hohe Flexibilität gefordert ist, sollten die neuen Formmassen Elastizitätsmoduli aufweisen, die möglichst kleiner als 1500 MPa sind.

Diese Aufgabe wird gemäss der vorliegenden Erfindung mit einer Polyamid-Blend-Formmasse gemäss dem Anspruch 1 gelöst. Diese erfindungsgemässe Polyamid-Blend-Formmasse umfasst einen Polyamid-Blend-Anteil und mindestens eine Schlagzähkomponente und ist dadurch gekennzeichnet, dass der Polyamid-Blend-Anteil aus folgenden Polyamiden besteht:
(A) 25 bis 50 Gew.-% zumindest eines teilkristallinen Polyamids mit einer Schmelz-Enthalpie > 40 J/g, gemessen mit Differential Scanning Calorimetry DSC, und mit durchschnittlich mindestens 8 C-Atomen pro Monomereinheit ausgewählt aus der Gruppe bestehend aus PA 610, PA 612, PA 1010, PA 106, PA 106/10T, PA 614 und PA 618;
(B) 10 bis 20 Gew.-% zumindest eines amorphen und/oder mikrokristallinen Polyamids, wobei das mikrokristalline Polyamid eine Schmelz-Enthalpie im Bereich von 4 bis 40 J/g, insbesondere im Bereich von 4 bis 25 J/g aufweist; und
(C) 5 bis 10 Gew.-% zumindest eines Polyamids mit durchschnittlich maximal 6 C-Atomen pro Monomereinheit, und bevorzugt mit einer Schmelz-Enthalpie > 40 J/g.

Diese erfindungsgemässe Polyamid-Blend-Formmasse ist des Weiteren dadurch gekennzeichnet, dass die Schlagzähkomponente umfasst:
(D) 10 bis 40 Gew.-% eines Polyamid-Elastomers, wie z.B. Polyetheramide und/oder Polyesteretheramide und/oder Polyesteramide, das aufgebaut ist aus Hartsegmenten und Weichsegmenten, wobei die Hartsegmente auf Lactamen und/oder Aminocarbonsäuren basieren und die Weichsegmente auf Polyether und/oder Polyester basieren; und
(E) 0 bis 35 Gew.-% eines Nichtpolyamid-Elastomers.

Bevorzugt werden teilkristalline Polyamide mit durchschnittlich maximal 6 C-Atomen pro Monomereinheit für die Komponente (C) ausgewählt. Bevorzugt werden zudem Polyamid-Elastomere der Komponente (D) aus der Gruppe Polyetheramide, Polyesteretheramide und/oder Polyesteramide.

Alle Angaben in Gew.-% beziehen sich auf das Gesamtgewicht der Polyamid-Blend-Formmasse und ergeben sich, optional ergänzt durch ebenfalls zugegebene handelsübliche Additive, zu 100 Gew.-%.

Weitere erfindungsgemässe Merkmale und bevorzugte Ausführungsformen ergeben sich aus den abhängigen Ansprüchen.

Im Zusammenhang mit der vorliegenden Erfindung werden folgende Definitionen angeführt:
Unter dem Begriff "Polyamid" werden verstanden:
   - Homopolyamide; und
   - Copolyamide.

Unter dem Begriff "Polyamidblends" werden verstanden:
- Mischungen (Blends) aus Homopolyamiden und Copolyamiden;
- Mischungen aus Homopolyamiden; und
- Mischungen aus Copolyamiden.

Unter dem Begriff "Polyamidformmasse" wird eine Formmasse verstanden, die Polyamide und/oder Polyamidblends enthält, wobei diese Polyamidformmasse Zusatzstoffe enthalten kann.

Mit dem Begriff "Struktureinheit" wird die kleinste sich in der Kette wiederholende Einheit eines Polyamids bezeichnet, die sich aus der Aminocarbonsäure und/oder dem Diamin und der Dicarbonsäure zusammensetzt. Eine zu "Struktureinheit" synonyme Bezeichnung ist der Begriff "Wiederholungseinheit".

Ausgewählte Beispiele solcher Struktureinheiten sind in der Tabelle 1 dargestellt:

**Tabelle 1**

| | |
|---|---|
| PA 6 | 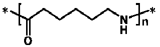 |
| PA 66 | 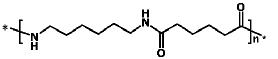 |
| PA 11 | 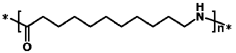 |
| PA 612 | 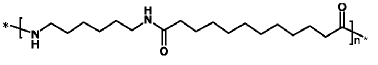 |
| PA 612/1012 | 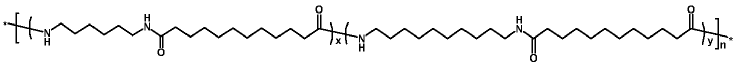 |

In der Tabelle 1 ist für jedes dieser Polyamide die Struktureinheit in eckige Klammern gesetzt und mit dem Index n versehen. Wie ersichtlich ist, umfasst die Struktureinheit eines Polyamids vom sogenannten AA/BB-Typ (z.B. PA 66 oder PA 612) mehr als eine Monomereinheit, nämlich jeweils sich ergänzende Diamin- und Dicarbonsäure-Monomereinheiten.

Unter dem Begriff "durchschnittliche (Ø) Anzahl C-Atome pro Monomereinheit" wird die Anzahl C-Atome verstanden, welche sich aus der Summe der Anzahl C-Atome in den verwendeten Monomeren geteilt durch die Anzahl der verwendeten Monomere berechnet. Wie zum Beispiel:

| | | |
|---|---|---|
| PA 6 | Ø 6 C-Atome pro Monomereinheit | [6:1=6] |
| PA 66 | Ø 6 C-Atome pro Monomereinheit | [(6+6):2=6] |
| PA 11 | Ø 11 C-Atome pro Monomereinheit | [11:1=11] |
| PA 612 | Ø 9 C-Atome pro Monomereinheit | [(6+12):2=9] |
| PA 612/1012 | Ø 10 C-Atome pro Monomereinheit | [((6+12)+(10+12)):4=10] |

Die durchschnittliche (Ø) Anzahl C-Atome pro Monomereinheit kann auch eine nicht ganze Zahl sein.

Es wird des Weiteren definiert, dass Polyamide aufgebaut sind auf Basis linearer und/oder verzweigter aliphatischer und/oder cycloaliphatischer Monomere, ausgewählt aus der Gruppe Diamine, Dicarbonsäuren, Lactame und Aminocarbonsäuren. Diamine, Dicarbonsäuren, Lactame und Aminocarbonsäuren sind die vier möglichen Monomer-Typen, die sich als entsprechende Monomereinheiten in den daraus aufgebauten Polyamiden wiederfinden. Dabei wird hier unterschieden zwischen:
- Polyamiden mit durchschnittlich mindestens 8 C-Atomen pro Monomereinheit, wie z.B. PA 11, PA 12, PA 412, PA 414, PA 418, PA 46/418, PA 610, PA 612, PA 614 und PA 618;
- amorphen und/oder mikrokristallinen Polyamiden; wobei das mikrokristalline Polyamid eine Schmelz-Enthalpie im Bereich von 4 bis 40 J/g, insbesondere im Bereich von 4 bis 25 J/g aufweist; wie z.B. PA MACMI/MACMT/12, PA MACMI/12 und PA PACM12; und
- Polyamiden mit durchschnittlich maximal 6 C-Atomen pro Monomereinheit, wie z.B. PA 6, PA 46 und PA 66.
Die Monomeren zur Herstellung der Polyamide können wie folgt ausgewählt sein:

**Dicarbonsäuren** können ausgewählt sein aus der folgenden Gruppe: Aliphatische C₄-C₄₄-Disäure, cycloaliphatische C₈-C₃₆-Disäure, aromatische Disäure (bevorzugt TPS, IPS, NDS), sowie Mischungen und Kombinationen davon. Bevorzugte Dicarbonsäuren sind ausgewählt aus der Gruppe Adipinsäure, Sebazinsäure, Dodecandisäure, Terephthalsäure, Isophthalsäure, Cyclohexandicarbonsäure und Mischungen davon, besonders bevorzugt Bernsteinsäure, Glutarsäure, Adipinsäure, Pimelinsäure, Korksäure, Azelainsäure, Sebazinsäure, Undecandisäure, Dodecandisäure, Brassylsäure, Tetradecandisäure, Pentadecandisäure, Hexadecandisäure, Heptadecandisäure, Octadecandisäure, Nonadecandisäure, Eicosandisäure, Japansäure, Cyclohexandicarbonsäure, insbesondere cis- und/ oder trans-Cyclohexan-1,4-dicarbonsäure und/oder cis- und/oder trans-Cyclohexan-1,3-dicarbonsäure (CHDA), Dimerfettsäure mit 36 oder 44 C-Atomen, Isophthalsäure, Terephthalsäure, Naphthalindicarbonsäure.

**Diamine** werden bevorzugt ausgewählt aus der Gruppe der verzweigten oder unverzweigten aliphatischen C₄-C₁₈-Diamine, cycloaliphatischen C₆-C₂₀-Diamine, Diamine mit aromatischem Kern sowie Mischungen und Kombinationen davon. Beispiele für lineare oder verzweigte, aliphatische Diamine sind 1,4-Butandiamin, 1,5-Pentandiamin, 2-Methyl-1,5-pentandiamin (MPMD), 1,6-Hexandiamin, 1,7-Heptandiamin, 1,8-Octandiamin (OMDA), 1,9-Nonandiamin (NMDA), 1,10-Decandiamin, 2-Methyl-1,8-octandiamin (MODA), 2,2,4-Trimethylhexamethylendiamin (NDT), 2,4,4-Trimethylhexamethylendiamin (INDT), 5-Methyl-1,9-nonandiamin, 1,11-Undecandiamin, 2-Butyl-2-ethyl-1,5-pentandiamin, 1,12-Dodecandiamin, 1,13-Tridecandiamin, 1,14-Tetradecandiamin, 1,16-Hexadecandiamin, Trimethylhexamethylendiamin-Terephthalat (TMDT), Isophorondiamin (IPD) und 1,18-Octadecandiamin.

Als **cycloaliphatische Diamine** können beispielsweise Cyclohexandiamin, 1,3-Bis-(aminomethyl)-cyclohexan (BAC), Isophorondiamin, Norbonandiamin, Norbonandimethylamin, Bis(aminomethyl)norbonan, 4,4'-Diaminodicyclohexylmethan (PACM), 2,2-(4,4'-Diaminodicyclohexyl)propan (PACP) und 3,3'-Dimethyl-4,4'-diaminodicyclohexylmethan (MACM) verwendet werden. Als arylaliphatische Diamine seien m-Xylylendiamin (MXDA) und p-Xylylendiamin (PXDA) erwähnt. Alle verwendeten Kurzbezeichnungen bzw. Abkürzungen entsprechen der ISO Norm 1874-1 (vgl. Tabelle A.3: Symbole für nichtlineare aliphatische Monomereinheiten).

**Lactame** respektive **Aminocarbonsäuren** sind bevorzugt ausgewählt aus der Gruppe, die aus Caprolactam, Laurinlactam, Aminocapronsäure, Aminolaurinsäure und Aminoundecansäure besteht. Bevorzugt sind Lactame bzw. α,ω-Aminosäuren mit 4, 6, 7, 8, 11 oder 12 C-Atomen. Dies sind die Lactame Pyrrolidin-2-on (4 C-Atome), ε-Caprolactam (6 C-Atome), Önanthlactam (7 C-Atome), Capryllactam (8 C-Atome), Laurinlactam (12 C-Atome) bzw. die α,ω-Aminosäuren 1,4-Aminobutansäure (4 C-Atome), 1,6-Aminohexansäure (6 C-Atome), 1,7-Aminoheptansäure (7 C-Atome), 1,8-Aminooctansäure (8 C-Atome), 1,11-Aminoundecansäure (11 C-Atome) und 1,12-Aminododecansäure (12 C-Atome).

Dem Fachmann ist bekannt, welche Monomer-Typen bzw. was für Monomere für die Herstellung der verschiedenen Polyamid-Typen (Homopolyamide vom Typ AA/BB oder vom Typ AB, bzw. für Copolyamide) einzusetzen sind.

Die vorliegende Erfindung wird vom bekannten Stand der Technik nicht nahegelegt:
Xanthos et al. erwähnen nicht die Verwendung eines Polyamid-Elastomers als Schlagzähmodifikator oder eines teilkristallinen Polyamids mit durchschnittlich mindestens 8 C-Atomen pro Monomereinheit.

Die US 5,928,738; die US 6,416,832; und die US 2005/0009976 A1 lehren nicht die Verwendung eines Polyamid-Elastomers als Schlagzähmodifikator.

Die US 2007/0089798 A1 lehrt nicht die Verwendung eines amorphen und/oder mikrokristallinen Polyamids, und auch nicht die Verwendung eines Polyamid-Elastomers als Schlagzähmodifikator. Obwohl der Elastizitätsmodul der PA 6 Komponente relativ niedrig ist, handelt es sich dabei nicht um ein Polyamid-Elastomer im Sinne der vorliegenden Erfindung, weil PA 6 keine Weichsegmente aufweist.

Von vorrangigem Interesse im Dokument US 2004/0259996 A1 sind die Anteile an nanoskaligen und faserigen Füllstoffen sowie an Nichtpolyamid-Elastomeren als Schlagzähmodifikatoren. Eine Lehre, dass die Kombination von Polyamiden mit durchschnittlich maximal 6 C-Atomen pro Monomereinheit mit amorphen und/oder mikrokristallinen Polyamiden und Polyamiden mit durchschnittlich mindestens 8 C-Atomen pro Monomereinheit besondere Eigenschaften ergibt, wird im Dokument US 2004/0259996 A1 (wie auch in den Dokumenten JP 2001-329165 A und EP 1 942 296 A1) nicht gegeben.

Die vorliegende Erfindung wird an Hand der beiliegenden Figur näher erläutert. Dabei zeigt:

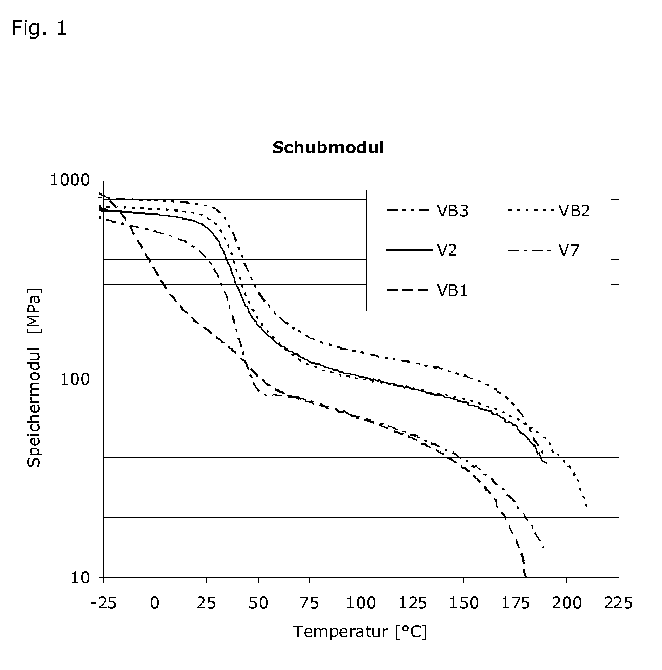

- Fig. 1: eine logarithmische Darstellung der Schubmodulkurven an mit den erfindungsgemässen Formmassen und mit Vergleichsformmassen hergestellten Formkörpern gemessen.

In der Figur 1 sind die Schubmodulkurven in Abhängigkeit der Temperatur aufgezeigt. Vergleichsbeispiel 1 (VB1), welches bevorzugt für Anwendungen wie BKV-Leitungen eingesetzt wird, zeigt hier einen sehr flachen Verlauf mit einem Speichermodul bei -25 °C von ca. 800 MPa und mit einem Speichermodul, das bei 180 °C bei 10 MPa liegt. Die Vergleichsbeispiele VB2 und VB3 zeigen bei 180 °C noch einen Speichermodul von 60 MPa. Die erfindungsgemässen Versuche V2 und V7 zeigen bei 180 °C einen Speichermodul von mindestens 20 MPa und bei -25 °C von kleiner als 700 MPa.

Bei der **Komponente A** des Polyamid-Blend-Anteils der erfindungsgemässen Polyamid-Blend-Formmasse handelt es sich um Polyamide mit durchschnittlich mindestens 8 C-Atomen pro Monomereinheit. Diese Polyamide sind aufgebaut auf Basis linearer und/oder verzweigter aliphatischer und/oder cycloaliphatischer und/oder aromatischer Monomere, die ausgewählt sind aus der Gruppe Diamine, Dicarbonsäuren, Lactame und Aminocarbonsäuren, wobei die Polyamide (A) gemäss Anspruch 1 ausgewählt sind aus PA 610, PA 612, PA 1010, PA 106, PA 106/10T, PA 614 und PA 618, oder Mischungen derselben.

Diese teilkristallinen Polyamide A weisen eine Schmelz-Enthalpie von > 40 J/g auf.

Wenn ein mikrokristallines Polyamid respektive Copolyamid der **Komponente B** Verwendung findet, so weist dieses mikrokristalline Polyamid und/oder Copolyamid eine Schmelz-Enthalpie im Bereich von 4 bis 40 J/g, insbesondere im Bereich von 4 bis 25 J/g auf (gemessen mit Differential Scanning Calorimetry, DSC). Bevorzugtermassen handelt es sich bei einem solchen mikrokristallinen Polyamid/Copolyamid um ein Polyamid, welches, wenn ohne weitere Bestandteile verarbeitet, transparente Formteile ergibt.

Mikrokristalline Polyamide sind aus aliphatischen, cycloaliphatischen und/oder aromatischen Monomeren aufgebaut und umfassen sowohl Homopolyamide als auch Copolyamide. Mikrokristalline Polyamide sind nicht mehr völlig amorph, sie weisen aber auf Grund ihrer mikrokristallinen Struktur Kristallite auf, die kleiner als die Wellenlänge des Lichtes und somit nicht sichtbar sind. Mikrokristalline Polyamide sind deshalb für das Auge noch durchsichtig.

Besonders bevorzugt für Komponente B sind dabei transparente Homopolyamide wie PA MACM12 und PA PACM12 sowie die transparenten Copolyamide PA 12/MACMI und PA MACM12/PACM12 sowie Mischungen oder Blends derselben. Ganz speziell bevorzugt ist PA MACMI/MACMT/12, welches aus WO 2007/087896 A1 bekannt ist.

Gemäss einer bevorzugten Ausführungsform handelt es sich bei der Komponente B um ein amorphes und/oder mikrokristallines Polyamid und/oder Copolyamid auf Basis eines cycloaliphatischen Diamins und/oder eines Diamins mit aromatischem Kern (z.B. MXDA oder PXDA). Bevorzugt wird dabei, dass dieses Polyamid auf Basis von cycloaliphatischen Diaminen und aliphatischen Dicarbonsäuren mit 10 bis 18 Kohlenstoffatomen aufgebaut ist. Speziell bevorzugt wird dabei, dass es sich beim cycloaliphatischen Diamin um MACM und/oder PACM und/oder IPD (Isophorondiamin) mit oder ohne zusätzliche Substituenten handelt. Bei dieser Komponente B als Ganzes wird insbesondere ein Copolyamid des Typs MACM/PACM bevorzugt, das jeweils aliphatische Dicarbonsäuren mit 10 bis 18 Kohlenstoffatomen wie zum Beispiel MACM12/PACM12 aufweist. Ganz speziell bevorzugt ist dabei eine PACM-Konzentration von grösser als 55 mol-%, insbesondere grösser 70 mol-%. MACM steht für die ISO-Bezeichnung Bis-(4-amino-3-methyl-cyclohexyl)-methan, welches unter dem Handelsnamen 3,3'-Dimethyl-4-4'-diaminodicyclohexylmethan als Laromin^{®} C260-Typ (CAS Nr. 6864-37-5) kommerziell erhältlich ist. Die Ziffer nach dem Begriff MACM steht jeweils für eine aliphatische lineare Dicarbonsäure (C12 z.B. DDS, Dodecandisäure), mit welcher das Diamin MACM polymerisiert ist. PACM steht für die ISO-Bezeichnung Bis-(4-aminocyclohexyl)-methan, welches unter dem Handelsnamen 4,4'-Diaminodicyclohexylmethan als Dicykan-Typ (CAS Nr. 1761-71-3) kommerziell erhältlich ist.

Alternativ oder zusätzlich kann es sich, wie bereits erläutert, bei der Komponente B um ein amorphes Polyamid und/oder Copolyamid handeln, dann bevorzugtermassen mit einer Schmelz-Enthalpie von weniger als 4 J/g (gemessen mit Differential Scanning Calorimetry, DSC). Bevorzugtennassen verfügt die Komponente B über eine Glasübergangstemperatur, die oberhalb von +120 °C, bevorzugt oberhalb von +140 °C und insbesondere bevorzugt oberhalb von +150 °C liegt.

In einer weiteren, bevorzugten Ausführungsform ist die Komponente B ein amorphes Polyamid und/oder Copolyamid auf Basis von aliphatischen und/oder cycloaliphatischen Diaminen. Bevorzugt werden amorphe Polyamide des Typs MACMI/12 verwendet, wobei der Gehalt an Laurinlactam in diesem Fall bevorzugt kleiner als 35 mol-%, insbesondere kleiner als 20 mol-% ist. Dabei steht jeweils I für Isophthalsäure. Bei der Komponente B kann es sich also um ein Polyamid auf Basis von aromatischen Dicarbonsäuren mit 8 bis 18 Kohlenstoffatomen oder von aliphatischen Dicarbonsäuren mit 6 bis 36 C-Atomen oder eine Mischung solcher Homopolyamide und/oder Copolyamide handeln. Bevorzugt wird hingegen ein Polyamid auf Basis von Lactamen und/oder Aminocarbonsäuren, wobei es sich bei den aromatischen Dicarbonsäuren z.B. um TPS (Terephthalsäure) und/oder IPS (Isophthalsäure) handelt. Das (transparente) Homopolyamid und/oder Copolyamid kann vorteilhafterweise ein Polyamid sein, das ausgewählt ist aus der Gruppe, die umfasst: PA 6I/6T, PA TMDT, PA NDT/INDT, PA 6I/MACMI/MACMT, PA 6I/PACMT, PA 6I/6T/MACMI, PA MACMI/MACM36 und PA 6I; lactamhaltige Polyamide wie PA 12/PACMI, PA 12/MACMI, PA 12/MACMT, PA 6/6I und PA 6/IPDT sowie eine beliebige Mischung dieser Polyamide. Weitere mögliche Systeme sind: PA MACM12, PA MACM18 oder PA PACM12, PA MACM12/PACM12, PA MACM18/PACM18, PA 6I/PACMI/PACMT oder daraus gebildete Mischungen. Die Bezeichnung bzw. Abkürzung der Polyamide erfolgt gemäss ISO 1874-1 (vgl. oben bei der Beschreibung von einzelnen Monomeren). Dabei steht z.B. jeweils I für Isophthalsäure und T für Terephthalsäure, TMD für Trimethylhexamethylendiamin, IPD für Isophorondiamin. Weiter ist es vorteilhaft und möglich, dass es sich beim Homopolyamid und/oder Copolyamid um ein Polyamid auf Basis wenigstens einer Dicarbonsäure und wenigstens eines Diamins mit einem aromatischen Kern handelt, bevorzugt auf Basis von MXD (meta-Xylylendiamin), wobei die Dicarbonsäure aromatisch und/oder aliphatisch sein kann, und wobei es sich z.B. bevorzugt um PA 6I/MXDI handelt.

Bei der **Komponente C** des Polyamid-Blend-Anteils der erfindungsgemässen Polyamid-Blend-Formmasse handelt es sich um Polyamide mit durchschnittlich maximal 6 C-Atomen pro Monomereinheit, wie z.B. PA 6, PA 46 und PA 66. Diese Polyamide sind teilkristallin.

Bei der **Komponente D** der erfindungsgemässen Polyamid-Blend-Formmasse handelt es sich um Polyamid-Elastomere, wie Polyetheramide, Polyesteretheramide und/oder Polyesteramide, die aus Hartsegmenten und Weichsegmenten aufgebaut sind. Die Hartsegmente der für die vorliegende Erfindung ausgewählten Polyamid-Elastomere basieren auf Lactamen und/oder Aminocarbonsäuren; sie basieren z.B. auf Aminocapronsäure, Aminoundecansäure, Aminolaurinsäure, Caprolactam, Laurinlactam oder Mischungen daraus. Als Weichsegmente können dabei beispielhaft Polyoxyethylendiamin, Polyoxyethylendiol, Polyoxyethylendicarbonsäure, Polyoxypropylendiamin, Polyoxypropylendiol, Polyoxypropylendicarbonsäure, Polyoxytetramethylendiamin, Polyoxytetramethylendiol, Polyoxytetramethylendicarbonsäure, Polycaprolacton-Diole, C₃₆-Dimerfettdiol, Polyoxyalkylendiole (lineare oder verzweigte C₂-C₅-Alkylene) mit einer zahlenmittleren Molmasse im Bereich von 200 bis 3000 g/mol, deren Copolymere oder Mischungen sowie Copolymere mit den oben aufgeführten Diolen genannt werden. Insbesondere mit eingeschlossen sind Polyetherderivate der Form A-X-Y-Z-B, wobei A, B unabhängig voneinander Amin- oder Alkohol-Rest oder Carbonsäure, X, Y, Z unabhängig voneinander mono-, oligo- oder polymere Einheiten aus Oxyethylen, Oxypropylen oder Oxytetramethylen darstellen. Solche Polyethersegmente werden beispielsweise von der Firma Huntsman unter der Bezeichnung Elastamine vertrieben.

Wie eben dargelegt enthalten die **Polyamid-Elastomere** Polyamid- (= Hartsegmente bzw. Hartblöcke) sowie Weichsegment-Einheiten, z.B. Polyether- und/oder Polyester-Einheiten und werden z.B. durch Polykondensation der jeweils mit reaktiven Endgruppen versehenen Einheiten gebildet. Dabei können die Polyamid-Einheiten (Polyamidsegmente) carboxyl- und/oder aminterminiert sein, sei es lediglich an einem Terminus des Segmentes A oder an beiden Termini. Die Weichsegmente sind beispielsweise je nach Struktur amin-, carboxyl- oder hydroxylterminiert. Die Weichsegment-Einheiten sind Ester- bzw. Polyester- und Polyether-Einheiten. Die Ester- oder Polyester-Einheiten sind bevorzugt carboxyl- oder hydroxylterminiert, während die Polyether-Einheiten vorzugsweise Hydroxyl-, Carboxyl- oder Aminoendgruppen tragen. Damit ergeben sich bevorzugt folgende Kombinationsmöglichkeiten für die Verknüpfung des Hartsegmentes und dem Weichsegment:
(1) Die Polyamid-Einheit ist carboxyl- und die Ester- oder Polyester-Einheit ist hydroxylterminiert. Das gebildete Copolymer ist dann ein Polyesteramid.
(2) Die Polyamid-Einheit ist carboxyl- und das Weichsegment ist aminterminiert. Das gebildete Copolymer ist dann ein Polyetheramid, für den beispielhaften Fall, dass das Weichsegment ein Polyether ist.
(3) Die Polyamid-Einheit ist carboxyl- und das Weichsegment ist hydroxylterminiert. Das gebildete Copolymer ist dann ein Polyetheresteramid, für den beispielhaften Fall, dass das Weichsegment ein Polyether ist.
(4) Die Polyamid-Einheit ist carboxyl- und das Weichsegment amino- und ein weiteres vorhandenes Weichsegment ist hydroxylterminiert. Das gebildete Copolymer ist ein Blockcopolyetheresteretheramid, für den beispielhaften Fall, dass das Weichsegment ein Polyether ist.
(5) Die Polyamid-Einheit ist amin- und das Weichsegment ist carboxylterminiert. Das gebildete Copolymer ist dann ein Polyetheramid, für den beispielhaften Fall, dass das Weichsegment ein Polyether ist.
(6) Die Polyamid-Einheit ist amin- und das Weichsegment und eine weitere Polyester-Einheit sind carboxylterminiert. Das gebildete Copolymer ist ein Polyetheresteresteramid, für den beispielhaften Fall, dass das Weichsegment ein Polyether ist.
(7) Die Polyamid-Einheit ist amin- und das Weichsegment ist carboxylterminiert. Das gebildete Copolymer ist ein Polyetheramid, für den beispielhaften Fall, dass das Weichsegment ein Polyether ist.

Die zuvor genannten Möglichkeiten sind jedoch lediglich beispielhaft und nicht abschliessend oder limitierend auf vorliegende Erfindung zu verstehen.

Die Herstellung von Polyamid-Elastomeren wird bekanntermassen je nach Typ des Polyamid-Elastomers bei unterschiedlichem Unterdruck vollzogen, hierfür werden spezielle Autoklaven mit einer starken Vakuumpumpe benötigt. So lehren die EP 1 329 481 A2 und DE 103 33 005 A1, dass zur Herstellung eines Polyamid-Elastomers ein Vakuum bzw. Totaldruck von 28 mbar benötigt wird. Eine besondere Ausführungsform der vorliegenden Erfindung ist, dass das Polyamid-Elastomer der Schlagzähkomponente in einem klassischen Polymerisationsautoklaven bei einem Totaldruck hergestellt wird, der 300 mbar beträgt oder höher liegt.

Bevorzugt ist die erfindungsgemässe Polyamid-Blend-Formmasse dadurch gekennzeichnet, dass die **Komponente E** ein Ethylen-α-Olefin-Copolymer, insbesondere bevorzugt ein EPM- und/oder EPDM-Elastomer (Ethylen-Propylen-Kautschuk respektive Ethylen-Propylen-Dien-Kautschuk), ist. So kann es sich beispielsweise um ein Elastomer handeln, welches auf einem Ethylen-C₃₋₁₂-α-Olefin-Copolymer basiert, das 20 bis 96 Gew.-% Ethylen und bevorzugt 25 bis 85 Gew.-% Ethylen enthält. Speziell bevorzugt wird ein C₃₋₁₂-α-Olefin ausgewählt aus der Gruppe Propen, 1-Buten, 1-Penten, 1-Hexen, 1-Octen, 1-Decen und/oder 1-Dodecen, wobei es sich insbesondere bevorzugt bei der Komponente E um Ethylen-Propylen-Kautschuk und/oder LLDPE (Linear Low Density Polyethylene) und/oder VLDPE (Very Low Density Polyethylene) handelt.

Alternativ oder zusätzlich (beispielsweise in Mischung) kann es sich bei der Komponente E um ein Terpolymeres auf Basis von Ethylen-C₃₋₁₂-α-Olefin mit einem unkonjugierten Dien handeln, das bevorzugt 25 bis 85 Gew.-% Ethylen und bis maximal im Bereich von 10 Gew.-% eines unkonjugierten Diens enthält. Speziell bevorzugt ist, dass es sich bei dem C₃₋₁₂-α-Olefin um ein Olefin ausgewählt aus der Gruppe Propen, 1-Buten, 1-Penten, 1-Hexen, 1-Octen, 1-Decen und/oder 1-Dodecen handelt, und/oder dass das unkonjugierte Dien bevorzugt ausgewählt ist aus der Gruppe Bicyclo(2.2.1)heptadien, Hexadien-1.4, Dicyclopentadien und/oder insbesondere 5-Ethylidennorbornen.

In Frage für die Komponente E kommen zudem auch Ethylen-Acrylat-Copolymere. Weitere mögliche Formen für die Komponente E sind aber auch Ethylen-Butylen-Copolymere, Nitril-Kautschuke (z.B. NBR, H-NBR), Siliconkautschuke, EVA und Microgele, die in der WO 2005/033185 A1 beschrieben sind, beziehungsweise Mischungen (Blends), welche derartige Systeme enthalten.

Bevorzugtermassen verfügt die Komponente E über Säureanhydridgruppen, die durch thermische oder radikalische Reaktion des Hauptkettenpolymers mit einem ungesättigten Dicarbonsäureanhydrid, einer ungesättigten Dicarbonsäure oder einem ungesättigten Dicarbonsäuremonoalkylester in einer Konzentration eingebracht werden, die für eine gute Anbindung an das Polyamid ausreicht. Dafür werden bevorzugt Reagenzien ausgewählt aus der folgenden Gruppe: Maleinsäure, Maleinsäureanhydrid, Maleinsäuremonobutylester, Fumarsäure, Aconitsäure und/oder Itaconsäureanhydrid. Vorzugsweise werden 0.1 bis 4.0 Gew.-% eines ungesättigten Anhydrids an die Schlagzähkomponente E aufgepfropft oder das ungesättigte Dicarbonsäureanhydrid oder dessen Vorstufe wird zusammen mit einem weiteren ungesättigten Monomeren aufgepfropft. Generell ist der Pfropfgrad bevorzugtermassen in einem Bereich von 0.1-1.0 %, speziell bevorzugt in einem Bereich von 0.3-0.7%.

Ebenfalls möglich als eine bevorzugte Komponente E ist eine Mischung aus einem Ethylen-Propylen-Copolymer und einem Ethylen-Butylen-Copolymer, dies mit einem Maleinsäureanhydrid-Pfropfgrad (MAH-Propfgrad) im Bereich von 0.3-0.7 %. Ein solches Produkt ist unter der Bezeichnung "Tafmer MC201" von der Firma Mitsui Chemicals (JP) erhältlich.

Die oben angegebenen möglichen Systeme für die Komponente E können auch in Mischungen verwendet werden.

**Handelsübliche Additive,** wie Stabilisatoren (z.B. UV- und Hitzestabilisatoren (anorganische und organische)), Weichmacher, Radikalfänger, Nukleationsmittel, Verarbeitungshilfsstoffe, Farbstoffe, Flammschutzmittel, Füllstoffe, Funktionsstoffe, Gleitmittel, Antistatikmittel (z.B. Russ), Verstärkungsmittel (z.B. Glasfasern, Kohlefasern, Glimmer, Glaskugeln) und/oder Pigmente oder Kombinationen oder Mischungen davon, werden der Polyamid-Blend-Formmasse je nach Erfordernis beigemischt. Bei den Glasfasern können solche mit rundem (kreisförmigem) Querschnitt und/oder solche mit flachem (nichtkreisförmigem) Querschnitt verwendet werden.

Aus der europäischen Patentanmeldung EP 1 416 010 A2 ist beispielsweise ein Verfahren zum Herstellen von Polyamid-Nanocomposites bekannt, gemäss welchem organisch modifizierte Schichtsilikate bis zu einer Endkonzentration dieser Schichtsilikate von maximal 10 Gew.-% (bevorzugt von 2.5 bis 6 Gew.-%) in der Schmelze des Polyamid-Nanocomposites eingestellt werden können. Als Mineral wurden exfolierte Schichtsilikate mit einer mittleren Partikelgrösse von maximal 100 nm verwendet. Zu den vorzugsweise verwendeten Phyllosilikaten (Schichtsilikaten) des Dreischichttyps (2:1) zählen Glimmer (z.B. Muskovit, Paragonit, Phologopit, Biotit, Lepidolith, Margarit), Smektite (Montmorillonit, Hectorit) und Vermiculit. Derartige organisch modifizierte Schichtsilikate können als Verstärkungsmittel in Spritzgussteilen, aber auch in extrudierten Rohren verwendet werden.

Bevorzugterweise wird die erfindungsgemässe Polyamid-Blend-Formmasse zum Herstellen von Formstücken verwendet, insbesondere für extrudierte Teile oder Spritzgussteile. Die Formstücke sind bevorzugt extrudierte Rohre bzw. Leitungen, die besonders bevorzugt einschichtig ausgebildet sind.

Spritzgegossenen Bauteilen, aber auch extrudierten Rohren können alternativ oder zusätzlich zu runden oder flachen Glasfasern und/oder Schichtsilikaten weitere Füllstoffe, wie z.B. Glasperlen, Talk-, CaCO₃- oder Kaolin-Partikel beigemischt sein.

Leitungen in oder an Kraftfahrzeugen umfassen:
Bremskraftverstärker-, Kühlwasser-, Luftansaug-, Heizungs-, Lüftungs-, Hydraulik- und Druckluft-Brems-Leitungen. In Frage kommen somit alle Medienleitungen an oder in einem Automobil, wie z.B. BKV Leitungen, Blow By Leitungen und Vakuumsteuerleitungen für Turbolader. Zudem können Ölleitungen und Leitungen der Servolenkung in Betracht gezogen werden.

Leitungen in oder an unbeweglichen Bauten umfassen:
Abwasser-, Meteorwasser-, Rohrpost-, Heizöl-, Fernheiz-, Kaltwasser-, Heisswasser- und Trinkwasser-Leitungen sowie Schutzrohre für elektrische Leitungen.

Mit den folgenden Beispielen soll die Herstellung der erfindungsgemässen Polyamid-Blend-Formmasse beispielhaft aber nicht einschränkend näher erläutert werden.

Folgende chemische Systeme wurden verwendet:

**Komponente A = teilkristalline Polyamide mit durchschnittlich mindestens 8 C-Atomen pro Monomereinheit:**

| | |
|---|---|
| PA 610: | Polyamid 610 mit ηᵣₑₗ = 1.9-2.25, EMS-CHEMIE AG, Schweiz |
| PA 612: | Polyamid 612 mit ηᵣₑₗ = 2.0-2.25, EMS-CHEMIE AG, Schweiz |

**Komponente B = Amorphes und/oder mikrokristallines Polyamid:**

| | |
|---|---|
| PA MACMI/MACMT/12: | amorphes Polyamid mit ηᵣₑₗ = 1.5-1.6 und mit einem Tg = 190 °C, EMS-CHEMIE AG, Schweiz |

**Komponente C = Polyamide mit durchschnittlich maximal 6 C-Atomen pro Monomereinheit:**

| | |
|---|---|
| PA 6: | Polyamid 6 mit ηᵣₑₗ = 3.35-3.5, EMS-CHEMIE AG, Schweiz |

### Schlagzähkomponente:

**Komponente D = Polyamid-Elastomer:**

| | |
|---|---|
| Polyamid-Elastomer: | Polyetheramid auf der Basis von PA 6 als Hartsegment mit ηᵣₑₗ = 1.75-1.9, EMS-CHEMIE AG, Schweiz. |

**Komponente E = Nichtpolyamid-Elastomer:**

| | |
|---|---|
| Nichtpolyamid-Elastomer: | Tafmer MC201, Mitsui Chemicals, Japan (mit Maleinsäureanhydrid gepfropfte Mischung aus Ethylen-Propylen-Copolymer und Ethylen-Butylen-Copolymer) |

Die Herstellung sogenannter Compounds oder Polyamid-Blend-Formmassen erfolgte auf einem Doppelwellen-Extruder Leistritz Micro27 (d= 27 mm, L/D= 40, 10 Gehäuse). Alle Komponenten der erfindungsgemässen Polyamid-Blend-Formmasse wurden in den Einzug (Zone 1) dosiert. Die Formmassen wurden bei einer Schneckendrehzahl von 150-200 UPM (Umdrehungen pro Minute) und Zylindertemperaturen im Bereich von 100 bis 300 °C mit einem Durchsatz von 12 kg/h hergestellt und granuliert. Vor der Weiterverarbeitung wurde das Granulat bei 80 °C für 24 h getrocknet.

Anschliessend wurden diese Mischungen auf einer Arburg Allrounder 320-210-750 (Hydronica) Spritzgussmaschine zu den benötigten Probekörpern verarbeitet, wobei die Zylindertemperaturen zwischen 220 bis 280 °C und die Formtemperatur zwischen 20 und 80 °C lagen. Die Schneckendrehzahl betrug 150 bis 400 UPM.

Die Herstellung der Test-Rohre in der Dimension 9 x 1.5 mm - 12.5 x 2.1 mm erfolgte auf einer Nokia-Maillefer Rohrextrusionsanlage, bestehend aus mindestens einem Extruder, einem Rohrwerkzeug, einer Kalibriervorrichtung mit Vakuumtank, sowie einem Kühlbad und nachfolgend einer Abzugs- und Schneidevorrichtung.

Die eingesetzten Polyamidformmassen werden vor der Rohrherstellung für ca. 8 h bei 80 °C getrocknet. Das vorgetrocknete Material wird über einen Trichter in eine 3-Zonen Schnecke gefördert, bei Zylindertemperaturen von 220 bis 280 °C aufgeschmolzen (Massetemperatur: 240 bis 280 °C) und homogenisiert, und ausgetragen über ein sogenanntes Rohwerkzeug. Der noch plastische Vorformling wird mittels Abzugvorrichtung durch eine Kalibrierung (z.B. einer Hülsenkalibrierung) gezogen, wo der Vorformling im Vakuumtank (Totaldruck: 100 bis 900 mbar) in der Kalibrierung ausgeformt wird. Dabei wird das geformte Rohr je nach Abzugsgeschwindigkeit mehr oder weniger lange gekühlt (die Länge der Kühlstrecke beträgt vorzugsweise 5 bis 20 m). Nach der gewünschten Abkühlung bzw. Kühlstrecke (Kühlbad-Temperatur: 10 bis 20 °C) wird das Rohr gewickelt oder geschnitten. Die Abzugsgeschwindigkeit liegt zwischen 20-100 m/min. Die einzelnen Zusammensetzungen sind in den Tabellen 2 bis 4 sowie 5 und 6 zusammengestellt.

Die Messungen wurden nach folgenden Normen und an folgenden Prüfkörpern durchgeführt:
- Zug-E-Modul:: IS0 527 mit einer Zuggeschwindigkeit von 1 mm/min; ISO-Zugstab, Norm: ISO/CD 3167, Typ A1, 170 x 20/10 x 4 mm, Temperatur 23 °C.
- Reissfestigkeit und Reissdehnung:: IS0 527 mit einer Zuggeschwindigkeit von 50 mm/min; ISO-Zugstab, Norm: ISO/CD 3167, Typ Al, 170 x 20/10 x 4 mm, Temperatur 23 °C.
- Schlagzähigkeit nach Charpy:: IS0 179/*eU; ISO-Prüfstab, Norm: ISO/CD 3167, Typ 91, 80 x 10 x 4 mm, Temperatur 23 °C;
* 1 = nicht instrumentiert,
* 2 = instrumentiert.
- Kerbschlagzähigkeit nach Charpy:: IS0 179/*eU; ISO-Prüfstab, Norm: ISO/CD 3167, Typ 91, 80 x 10 x 4 mm, Temperatur 23 °C bzw. -30 °C;
* 1 = nicht instrumentiert,

* 2 = instrumentiert.
- Glasumwandlungstemperatur (Tg):: ISO-Norm 11357-11-2; Granulat
- Schmelztemperatur (Tₘ):: ISO-Norm 11357-11-2; Granulat
- Schmelz-Enthalpie (ΔH):: ISO-Norm 11357-11-2; Granulat
- Berstdruck an Rohren:: DIN 73378; 23 °C

Die Differential Scanning Calorimetry (DSC) wurde mit Aufheizrate von 20 K/min durchgeführt.

Die relative Viskosität wurde nach DIN EN IS0 307, für PA 610, PA 612, amorphes PA, Polyamid-Elastomer und Compounds in 0.5 Gew.-%-iger m-Kresollösung (d.h. 0.5 g PA in 100 ml Lösung), bei einer Temperatur von 20 °C; für PA 6 in 1 Gew.-%- iger Schwefelsäurelösung (d.h. 1 g PA in 100 ml Lösung) gemessen.

Die Schmelzvolumen-Rate MVR (Melt Volume Rate) wurde nach IS0 1133 bei 275 °C gemessen.

Die Unterdruckfestigkeit wird bestimmt indem ein Unterdruck von 940 mbar angelegt wird und dann die Temperatur langsam erhöht wird. Die Temperatur an der das Rohr kollabiert wird gemessen.

Die Schubmodulkurven wurden an Prüfkörpern mit den Massen 40 x 10 x 1 mm an einem Physica MCR301 der Fa. Anton Paar mit einer Deformation von 1.5 % und einer Frequenz von 1 Hz und einer Heizrate von 4 K/min aufgenommen.

Wenn in den Tabellen nichts anderes vermerkt ist, wurden die Prüfkörper für den Zugversuch im trockenen Zustand verwendet. Dazu wurden die Prüfkörper nach dem Spritzguss mindestens 48 h bei Raumtemperatur in trockener Umgebung gelagert. Die Rohre wurden vor der Prüfung konditioniert. Dabei zeigt die Tabelle 2 Basis-Daten für die Formmassen der Vergleichsbeispiele VB1, VB2 und VB3.

**Tabelle 2**

| **Komponente** | **Bedingungen** | **Einheit** | **VB1** | **VB2** | **VB3** |
|---|---|---|---|---|---|
| VESTAMID EX9350 | | | 100 | | |
| PA 610 | | | | 93.4 | 73.4 |
| PA MACMI/MACMT/12 | | | | | 20 |
| Nichtpolyamid-Elastomer | | | | 5 | 5 |
| Masterbatch für Schwarzeinfärbung und H-Stabilisierung | | | | 1.6 | 1.6 |
| **Total** | | | **100** | **100** | **100** |
| H₂O Gehalt | | Gew.-% | 0.01 | 0.01 | 0.01 |
| Schmelzpunkt | | °C | 198 | 220 | 220 |
| Shore Härte D | | | 66 | n.b. | n.b. |
| Zugmodul | 1mm/min | MPa | 670 | 2340 | 2120 |
| Belastung bei 50% Dehnung | 50mm/min | MPa | 29 | n.b. | n.b. |
| Schlag Charpy | -30 °C | kJ/m² | o.B. | o.B. | o.B. |
| Kerbschlag Charpy | 23 °C | kJ/m² | 23 | 9 | 10 |
| Kerbschlag Charpy | -30 °C | kJ/m² | 6 | 9 | 9 |

| | | | | | |
|---|---|---|---|---|---|
| Dabei bedeuten: o.B. = ohne Bruch; n.b. = nicht bestimmt | | | | | |

VB1 ist ein Polyamid 612 Elastomer mit einem Elastizitätsmodul von 670 MPa und einem Charpy-Kerbschlag von 23 kJ/m² gemessen bei +23 °C. Im Vergleich sind VB2 und VB3 deutlich steifer, der Elastizitätsmodul liegt bei 2340 MPa bzw. 2120 MPa und auch der Charpy-Kerbschlag bei +23 °C ist mit 9 bzw. 10 kJ/m² niedriger als bei VB1.

Die Tabelle 3 zeigt Basis-Daten für die Formmassen der erfindungsgemässen Versuche V2, V3 und V4 und des nicht erfindungsgemässen Versuchs V1 (ohne C).

**Tabelle 3**

| **Komponente** | | **Bedingungen** | **Einheit** | **V1** | **V2** | **V3** | **V4** |
|---|---|---|---|---|---|---|---|
| A | PA 610 | | | 32.2 | 20.1 | 31.2 | 31.2 |
| B | PA MACMI/MACMT/12 | | | 8.1 | 15.0 | 15.0 | 15.0 |
| C | PA 6 | | | | 5.0 | 7.5 | 10.0 |
| D | Polyamid-Elastomer | | | 39.3 | 39.3 | 27.5 | 27.5 |
| E | Nichtpolyamid-Elastomer | | | 19.3 | 19.3 | 17.5 | 15.0 |
| | Masterbatch für Schwarzeinfärbung und H-Stabilisierung | | | 1.1 | 1.3 | 1.3 | 1.3 |
| **Total** | | | | **100.0** | **100.0** | **100.0** | **100.0** |
| H₂O Gehalt | | | Gew.-% | 0.007 | 0.023 | 0.016 | 0.020 |
| Schmelzpunkt | | | °C | 220 | 219 | 220 | 221 |
| Shore Härte D | | | | n.b. | n.b. | 68 | n.b. |
| Zugmodul | | 1mm/min | MPa | 670 | 740 | 1015 | 1130 |
| Belastung bei 50% Dehnung | | 50mm/min | MPa | 25 | 27 | 31 | 33 |
| Schlag Charpy | | -30 °C | kJ/m² | o.B. | o.B. | o.B. | o.B. |
| Kerbschlag Charpy | | 23 °C | kJ/m² | O.B. | O.B. | 87 | 84 |
| Kerbschlag Charpy | | -30 °C | kJ/m² | 20 | 20 | 19 | 18 |

| | | | | | | | |
|---|---|---|---|---|---|---|---|
| Dabei bedeuten: o.B. = ohne Bruch; n.b. = nicht bestimmt | | | | | | | |

Mit den Daten für die Formmassen der erfindungsgemässen Versuche V2-V4 kann gezeigt werden, dass mit geeigneter Wahl der Blendzusammensetzung der Elastizitätsmodul zwischen 740 MPa bis 1130 MPa eingestellt werden kann. Im Vergleich zu VB2 und VB3 wird der Elastizitätsmodul deutlich reduziert.

Auch werden durch die erfinderischen Blends der Charpy-Kerbschlag bei +23 °C > 80 kJ/m² eingestellt, was höher ist als für die Vergleichsbeispiele VB1-VB3. Besonders hervorzuheben ist der im Vergleich zu VB1-VB3 deutlich erhöhte Kerbschlag bei -30 °C.

Die Tabelle 4 zeigt Basis-Daten für die Formmassen der erfindungsgemässen Versuche V5 und V7 und des nicht erfindungsgemässen Versuchs V6 (ohne C).

**Tabelle 4**

| **Komponente** | | **Bedingunger** | **Einheit** | **V5** | **V6** | **V7** |
|---|---|---|---|---|---|---|
| A | PA 610 | | | 31.2 | 31.2 | |
| A | PA 612 | | | | | 31.2 |
| B | PA MACMI/MACMT/12 | | | 15.0 | 22.5 | 15.0 |
| C | PA 6 | | | 12.0 | | 7.5 |
| D | Polyamid-Elastomer | | | 27.5 | 27.5 | 27.5 |
| E | Nichtpolyamid-Elastomer | | | 13.0 | 17.5 | 17.5 |
| | Masterbatch für Schwarzeinfärbung und H-Stabilisierung | | | 1.3 | 1.3 | 1.3 |
| **Total** | | | | **100.00** | **100.00** | **100.00** |
| H₂O Gehalt | | | Gew.-% | 0.02 | 0.026 | 0.021 |
| Schmelzpunkt | | | °C | 220 | 219 | 213 |
| Zugmodul | | 1mm/min | MPa | 1250 | 1020 | 1040 |
| Belastung bei 50% Dehnung | | 50mm/min | MPa | 35 | 32 | 31 |
| Schlag Charpy | | -30 °C | kJ/m² | o.B. | o.B. | o.B. |
| Kerbschlag Charpy | | 23 °C | kJ/m² | 79 | 75 | O.B. |
| Kerbschlag Charpy | | -30 °C | kJ/m² | 17 | 20 | 19 |

| | | | | | | |
|---|---|---|---|---|---|---|
| Dabei bedeutet: o.B. = ohne Bruch | | | | | | |

Mit den Daten für die Formmassen der erfindungsgemässen Versuche V5 und V7 kann gezeigt werden, dass mit geeigneter Wahl der Blendzusammensetzung der Elastizitätsmodul zwischen 1040 MPa bis 1250 MPa eingestellt werden kann. Im Vergleich zu VB2 und VB3 wird der Elastizitätsmodul deutlich reduziert.

Auch werden durch die erfinderischen Blends der Charpy-Kerbschlag bei 23 °C > 75 kJ/m² eingestellt, was höher ist als für VB1-VB3. Besonders hervorzuheben ist der im Vergleich zu VB1-VB3 deutlich erhöht Kerbschlag bei -30 °C.

Es wird hier angemerkt, dass das in den Tabellen 2 bis 4 erwähnte Polyamid PA MACMI/MACMT/12 auch unter dem Namen Grilamid^{®} TR 60 (EMS-CHEMIE AG) bekannt ist.

An den aus diesen Formmassen hergestellten Rohren respektive Prüfkörpern wurden weitere Messungen vorgenommen, die entsprechenden Resultate sind in den Tabellen 5 bis 8 zusammengestellt.

Die Tabelle 5 zeigt den bei verschiedenen Temperaturen an ISO-Zugstäben gemessenen E-Modul.

**Tabelle 5**

| **Bedingungen** | **Einheit** | **VB1** | **V1** | **V2** | **V3** | **V4** | **V5** | **V6** | **V7** |
|---|---|---|---|---|---|---|---|---|---|
| -40°C | MPa | 2415 | n.b. | 1500 | 1550 | 1930 | 1710 | n.b. | 1585 |
| 23°C | MPa | 670 | 670 | 740 | 1015 | 1130 | 1250 | 1020 | 1040 |
| 80°C | MPa | 260 | 130 | n.b. | 204 | n.b. | n.b. | n.b. | n.b. |
| 120°C | MPa | 150 | 100 | n.b. | 134 | n.b. | n.b. | n.b. | n.b. |
| 180°C | MPa | 40 | 40 | 50 | 55 | 65 | 75 | 40 | 30 |
| 200°C | MPa | n.m. | n.b. | n.b. | 25 | n.b. | n.b. | n.b. | n.b. |

| | | | | | | | | | |
|---|---|---|---|---|---|---|---|---|---|
| Dabei bedeuten: n.b. = nicht bestimmt; n.m. = nicht messbar, da VB1 einen Schmelzpunkt von 198 °C hat. | | | | | | | | | |

Besonders hervorzuheben ist der im Vergleich zu VB1 reduzierte Elastizitätsmodul bei -40 °C bei gleichem bis höherem Elastizitätsmodul bei 180 °C.

Die Tabelle 6 zeigt die Hitzealterung von ISO-Zugstäben durch eine Lagerung bei 150 °C und die sich daraus ergebende Zugbelastung beim Bruch dieser ISO-Zugstäbe.

**Tabelle 6**

| **Lagerzeit [h]** | **Einheit** | **V3** | | **VB1** | |
|---|---|---|---|---|---|
| 0 | MPa | 38 | 100% | 43 | 100% |
| 250 | MPa | 37 | 97% | 33 | 77% |
| 500 | MPa | 37 | 97% | 31 | 72% |
| 750 | MPa | 36 | 95% | 29 | 67% |
| 1000 | MPa | 36 | 95% | 28 | 65% |

| | | | | | |
|---|---|---|---|---|---|
| V3 besitzt nach 1000 h bei 150 °C noch eine Bruchspannung von 97 % des Ausgangswerts, hingegen ist die Bruchspannung bei VB1 bereits auf 65 % abgesunken. | | | | | |

Die Tabelle 7 zeigt die Hitzealterung von ISO-Zugstäben durch eine Lagerung bei 150 °C und die sich daraus ergebende Verlängerung beim Bruch dieser ISO-Zugstäbe.

**Tabelle 7**

| **Lagerzeit [h]** | **Einheit** | **V3** | | **VB1** | |
|---|---|---|---|---|---|
| 0 | % | 110 | 100% | 347 | 100% |
| 250 | % | 83 | 75% | 273 | 79% |
| 500 | % | 64 | 58% | 167 | 48% |
| 750 | % | 62 | 57% | 116 | 33% |
| 1000 | % | 56 | 51% | 86 | 25% |

| | | | | | |
|---|---|---|---|---|---|
| V3 besitzt nach 1000 h bei 150 °C noch eine Bruchdehnung von 51 % des Ausgangswerts, hingegen ist die Bruchdehnung bei VB1 bereits nach 500 h unter den 50 % des Ausgangswerts gesunken. | | | | | |

Die Tabelle 8 zeigt den Berstdruck nach DIN 73378 (+23°C) an Rohren mit unterschiedlicher Dimension.

**Tabelle 8**

| Rohre 9 x 1.5mm Berstdruck [bar] | | | Rohre 10 x 1mm Berstdruck [bar] | | | Rohre 12.5 x 1.25mm Berstdruck [bar] | | |
|---|---|---|---|---|---|---|---|---|
| **V3** | **V4** | **V5** | **V3** | **V4** | **V5** | **V3** | **V4** | **V5** |
| 90 | 90 | 104 | 51 | 53 | 56 | 47 | 51 | 53 |

Beim Testen der Rohre auf ihre Unterdruckfestigkeit, wurde die Einfalltemperatur der Leitungen bei einem Unterdruck von 940 mbar gemessen. Die geprüften, mit der erfindungsgemässen Formmasse V3 hergestellten Leitungen mit den Dimensionen 12.5 x 1.25 mm sind bei -940 mbar Unterdruck und +166 °C eingefallen. Diese Einfalltemperatur liegt somit 10 °C über derjenigen von VB1. Damit konnte gezeigt werden, dass die erfindungsgemässen Formmassen bei der Verwendung als Vakuumleitung bei höherer Temperatur, bevorzugt als Bremskraftverstärkerleitung eines Kraftfahrzeugs, einen speziellen und unerwarteten Vorteil haben.

Wenngleich die Figur 1 ausschliesslich die Schubmodulkurven von Formstücken zeigt, die mit unterschiedlichen Formmassen hergestellt worden sind, so soll diese Figur den Offenbarungsumfang dieser Patentanmeldung nicht beschränken. Tatsächlich wurden auch Zugmodule bzw. Elastizitätsmodule gemessen. Dabei stellte sich heraus, dass Formstücke, die mit erfindungsgemässen Polyamid-Blend-Formmassen (z.B. V2) hergestellt wurden, bei einer Temperatur von -30 °C einen Elastizitätsmodul von höchstens 1400 MPa aufweisen. Weitere Messungen ergaben, dass Formstücke, die mit erfindungsgemässen Polyamid-Blend-Formmassen (z.B. V2) hergestellt wurden, bei einer Temperatur von -40 °C einen Elastizitätsmodul von höchstens 2400 MPa aufweisen. Bei mit bevorzugten Polyamid-Blend-Formmassen (z.B. V7) hergestellten Formstücken beträgt der Elastizitätsmodul bei -40 °C höchstens 2000 MPa, bei besonders bevorzugten Polyamid-Blend-Formmassen (z.B. V3) höchstens 1950 MPa.

Auch bei höheren Temperaturen, z.B. bei +120 °C, wurden Zugmodule bzw. Elastizitätsmodule an Formstücken gemessen, die mit erfindungsgemässen Polyamid-Blend-Formmassen (z.B. V2) hergestellt wurden. Dabei hat es sich herausgestellt, dass diese Formstücke bei einer Temperatur von +120 °C einen Elastizitätsmodul von höchstens 180 MPa aufweisen. Bei mit bevorzugten Polyamid-Blend-Formmassen (z.B. V7) hergestellten Formstücken beträgt der Elastizitätsmodul höchstens 150 MPa, bei besonders bevorzugten Polyamid-Blend-Formmassen (z.B. V3) höchstens 140 MPa.

## Patentansprüche

1. Polyamid-Blend-Formmasse mit einem Polyamid-Blend-Anteil und mindestens einer Schlagzähkomponente, **dadurch gekennzeichnet, dass** der Polyamid-Blend-Anteil aus folgenden Polyamiden besteht:
(A) 25 bis 50 Gew.-% zumindest eines teilkristallinen Polyamids mit einer Schmelz-Enthalpie von > 40 J/g, gemessen mit Differential Scanning Calorimetry DSC, und mit durchschnittlich mindestens 8 C-Atomen pro Monomereinheit ausgewählt aus der Gruppe bestehend aus PA 610, PA 612, PA 1010, PA 106, PA 106/10T, PA 614 und PA 618;
(B) 10 bis 20 Gew.-% zumindest eines amorphen und/oder mikrokristallinen Polyamids, wobei das mikrokristalline Polyamid eine Schmelz-Enthalpie im Bereich von 4 bis 40 J/g aufweist, gemessen mit Differential Scanning Calorimetry DSC; und
(C) 5 bis 10 Gew.-% zumindest eines Polyamids mit durchschnittlich maximal 6 C-Atomen pro Monomereinheit;
**und dass** die Schlagzähkomponente umfasst:
(D) 10 bis 40 Gew.-% eines Polyamid-Elastomers, das aufgebaut ist aus Hartsegmenten und Weichsegmenten, wobei die Hartsegmente auf Lactamen und/oder Aminocarbonsäuren und die Weichsegmente auf Polyether- und/oder Polyester-Einheiten basieren; und
(E) 0 bis 35 Gew.-% eines Nichtpolyamid-Elastomers;
wobei sich alle Angaben in Gew.-% auf das Gesamtgewicht der Polyamid-Blend-Formmasse beziehen und sich, optional ergänzt durch ebenfalls zugegebene handelsübliche Additive, zu 100 Gew.-% ergeben.

2. Polyamid-Blend-Formmasse nach Anspruch 1, **dadurch gekennzeichnet, dass** das mikrokristalline Polyamid der Komponente (B) eine Schmelz-Enthalpie im Bereich von 4 bis 25 J/g aufweist.

3. Polyamid-Blend-Formmasse nach einem der Ansprüche 1 oder 2, **dadurch gekennzeichnet, dass** die Polyamid-Elastomere der Komponente (D) aus der Gruppe Polyetheramide, Polyesteretheramide und/oder Polyesteramide ausgewählt sind.

4. Polyamid-Blend-Formmasse nach einem der vorhergehenden Ansprüche, **dadurch gekennzeichnet, dass** das zumindest eine amorphe und/oder mikrokristalline Polyamid der Komponente (B) ausgewählt ist aus einer Gruppe, welche die Polyamide PA MACMI/MACMT/12, PA MACMI/12 und PA PACM12, PA 6I/6T, Poly-Trimethylhexamethylendiamin-Terephthalat, PA NDT/INDT, PA 6I/MACMI/MACMT, PA 6I/6T/MACMI, PA MACM12/PACM12, PA MACMI/MACM36, PA 6I; PA 12/PACMI, PA 12/MACMI, PA 12/MACMT, PA 6I/PACMT, PA 6/6I und PA 6/IPDT; PA MACM12, PA MACM18, PA PACM12, PA MACM12/PACM12, PA MACM18/PACM18, PA 6I/PACMI/PACMT; PA 6I/MXDI; sowie eine beliebige Mischung dieser Polyamide umfasst.

5. Polyamid-Blend-Formmasse nach Anspruch 4, **dadurch gekennzeichnet, dass** das Polyamid PA MACMI/MACMT/12 gebildet ist aus:
- 30 bis 45 Gewichtsteilen MACMI,
- 30 bis 45 Gewichtsteilen MACMT, und
- 10 bis 40 Gewichtsteilen Laurinlactam.

6. Polyamid-Blend-Formmasse nach einem der vorhergehenden Ansprüche, **dadurch gekennzeichnet, dass** das zumindest eine Polyamid der Komponente (C) mit durchschnittlich maximal 6 C-Atomen pro Monomereinheit ausgewählt ist aus einer Gruppe, welche die Polyamide PA 6, PA 46 und PA 66 umfasst.

7. Polyamid-Blend-Formmasse nach Anspruch 1, **dadurch gekennzeichnet, dass** der Polyamid-Blend-Anteil aus den folgenden Polyamiden besteht:
(A) 25 bis 50 Gew.-% PA 610;
(B) 10 bis 20 Gew.-% PA MACMI/MACMT/12; und
(C) 5 bis 10 Gew.-% PA 6.

8. Polyamid-Blend-Formmasse nach einem der vorhergehenden Ansprüche, **dadurch gekennzeichnet, dass** das Polyamid-Elastomer der Komponente (D) mit Hartsegmenten auf Lactam- und/oder Aminocarbonsäure-Basis ausgewählt ist aus der Gruppe der Polyetheramide, Polyesteretheramide und/oder Polyesteramide, wobei die Hartsegmente Polyamid-Einheiten aus PA 6-, PA 11-, oder PA 12-Segmenten sind.

9. Polyamid-Blend-Formmasse nach einem der vorhergehenden Ansprüche, **dadurch gekennzeichnet, dass** das Nichtpolyamid-Elastomer der Komponente (E) ausgewählt ist aus einer Gruppe, die Ethylen-α-Olefin-Copolymere, Ethylen-C₃₋₁₂-α-Olefin-Copolymere, und Ethylen-C₃₋₁₂-α-Olefin mit einem unkonjugierten Dien, NBR (Acrylnitril-Butadien-Kautschuk) und Acrylat umfasst.

10. Polyamid-Blend-Formmasse nach Anspruch 9, **dadurch gekennzeichnet, dass** das Ethylen-α-Olefin-Copolymer ein EP-Elastomer (Ethylen-Propylen-Kautschuk) und/oder EPDM-Elastomer (Ethylen-Propylen-Dien-Kautschuk) ist, wobei das Olefin des Ethylen-C₃₋₁₂-α-Olefin-Copolymers ausgewählt ist aus der Gruppe Propen, 1-Buten, 1-Penten, 1-Hexen, 1-Octen, 1-Decen und/oder 1-Dodecen, und wobei das unkonjugierte Dien ausgewählt ist aus der Gruppe Bicyclo(2.2.1)heptadien, Hexadien-1.4, Dicyclopentadien und 5-Ethylidennorbornen.

11. Polyamid-Blend-Formmasse nach Anspruch 9, **dadurch gekennzeichnet, dass** die Ethylen-α-Olefin-Copolymere eine mit Maleinsäureanhydrid gepfropfte Mischung aus Ethylen-Propylen-Copolymer und Ethylen-Butylen-Copolymer sind.

12. Polyamid-Blend-Formmasse nach einem der vorhergehenden Ansprüche, **dadurch gekennzeichnet, dass** dem Blend ein Füllstoff beigemischt ist, der ausgewählt ist aus einer Gruppe, die Fasern und organisch modifizierte Schichtsilikate umfasst, wobei die Fasern als Glasfasern ausgebildet sind, wobei der Polyamid-Blend-Formmasse bis zu 20 Gew.-% an Glasfasern beigemischt sind, und wobei die organisch modifizierten Schichtsilikate ausgewählt sind aus einer Gruppe, die Glimmer, Smektite und Vermiculit umfasst, wobei der Polyamid-Blend-Formmasse bis zu 15 Gew.-% an organisch modifizierten Schichtsilikaten beigemischt sind.

13. Verfahren zum Herstellen einer Polyamid-Blend-Formmasse nach einem der Ansprüche 1 bis 12, **dadurch gekennzeichnet, dass** jedes Polyamid der Komponenten (A,B,C) des Polyamid-Blend-Anteils sowie das Polyamid-Elastomer der Schlagzähkomponente (D) in einem klassischen Polymerisationsautoklaven bei einem Totaldruck hergestellt wird, der 300 mbar beträgt oder höher liegt.

14. Formstück, hergestellt aus einer Polyamid-Blend-Formmasse, gemäss einem der Ansprüche 1 bis 12, **dadurch gekennzeichnet, dass** dieses Formstück bei einer Temperatur von -30 °C einen Elastizitätsmodul von höchstens 1400 MPa aufweist.

15. Formstück, hergestellt aus einer Polyamid-Blend-Formmasse, gemäss einem der Ansprüche 1 bis 12, **dadurch gekennzeichnet, dass** dieses Formstück bei einer Temperatur von -40 °C einen Elastizitätsmodul von höchstens 2400 MPa, bevorzugt von höchstens 2000 MPa, und besonders bevorzugt von höchstens 1950 MPa aufweist.

16. Formstück, hergestellt aus einer Polyamid-Blend-Formmasse, gemäss einem der Ansprüche 1 bis 12, **dadurch gekennzeichnet, dass** dieses Formstück bei einer Temperatur von +120 °C einen Elastizitätsmodul von höchstens 180 MPa, bevorzugt von höchstens 150 MPa, besonders bevorzugt von höchstens 140 MPa aufweist.

17. Formstück nach einem der Ansprüche 14 bis 16, **dadurch gekennzeichnet, dass** es als Rohr ausgebildet ist, das ausgewählt ist aus einer Gruppe, die Leitungen in oder an Kraftfahrzeugen und Leitungen in oder an unbeweglichen Bauten umfasst, wobei das Rohr vorzugsweise als einschichtig extrudiertes Rohr ausgebildet ist.

18. Formstück nach Anspruch 17, **dadurch gekennzeichnet, dass** die Leitungen in oder an Kraftfahrzeugen Bremskraftverstärker-, Kühlwasser-, Luftansaug-, Heizungs-, Lüftungs-, Hydraulik- und Druckluft-Brems-Leitungen umfassen.

19. Formstück nach Anspruch 17, **dadurch gekennzeichnet, dass** die Leitungen in oder an unbeweglichen Bauten Abwasser-, Meteorwasser-, Rohrpost-, Heizöl-, Fernheiz-, Kaltwasser-, Heisswasser- und Trinkwasser-Leitungen sowie Schutzrohre für elektrische Leitungen umfassen.

20. Formstück nach einem der Ansprüche 14 bis 18, **dadurch gekennzeichnet, dass** es als spritzgegossenes Bremskraftverstärker-, Kraftstofffilter- oder Luftfilter-Bauteil ausgebildet ist.

## Claims

1. A polyamide blend moulding material, comprising a polyamide blend fraction and at least one impact-resistant component, **characterized in that** the polyamide blend fraction consists of the following polyamides:
(A) 25 to 50% by weight of at least one semi-crystalline polyamide with an enthalpy of fusion >40 J/g measured by differential scanning calorimetry DSC and with an average of at least 8 C atoms per monomeric unit selected from the group consisting of PA 610, PA 612, PA 1010, PA 106, PA 106/10T, PA 614 and PA 618;
(B) 10 to 20% by weight of at least one amorphous and/or microcrystalline polyamide, wherein the microcrystalline polyamide has an enthalpy of fusion in the range of 4 to 40 J/g, measured by differential scanning calorimetry DSC; and
(C) 5 to 10% by weight of at least one polyamide with an average of a maximum of 6 C atoms per monomeric unit; and that the impact-resistant component comprises:
(D) 10 to 40% by weight of a polyamide elastomer which is composed of hard segments and soft segments, wherein the hard segments are based on lactams and/or amino-carboxylic acids, and the soft segments are based on polyether and/or polyester units; and
(E) 0 to 35% by weight of a non-polyamide elastomer, wherein all the information in the weight percent relates to the total weight of the polyamide blend moulding material and optionally supplemented by likewise added commercially available additives gives 100% by weight.

2. The polyamide blend moulding material according to claim 1, **characterized in that** the microcrystalline polyamide of component (B) has an enthalpy of fusion in the range of 4 to 25 J/g.

3. The polyamide blend moulding material according to claim 1 or 2, **characterized in that** the polyamide elastomers of component (D) are selected from the group of polyether amides, polyester ether amides and/or polyester amides.

4. The polyamide blend moulding material according to any one of the preceding claims, **characterized in that** the at least one amorphous and/or microcrystalline polyamide of component (B) is selected from a group comprising the polyamides PA MACMI/MACMT/12, PA MACMI/12 and PA PACM12, PA 6I/6T, polytrimethyl hexamethylene diamine terephthalate, PA NDT/INDT, PA 6I/MACMI/MACMT, PA 6I/6T/MACMI, PA MACM12/PACM12, PA MACMI/MACM36, PA 61, PA 12/PACMI, PA 12/MACMI, PA 12/MACMT, PA 61/PACMT, PA 6/6I and PA 6/IPDT; PA MACM12, PA MACM18, PA PACM12, PA MACM12/PACM12, PA MACM18/PACM18, PA 6I/PACMI/PACMT, PA 6I/MXDI; and any mixture of these polyamides.

5. The polyamide blend moulding material according to claim 4, **characterized in that** the polyamide PA MACMI/MACMT/12 is formed from:
- 30 to 45 parts by weight of MACMI,
- 30 to 45 parts by weight of MACMT, and
- 10 to 40 parts by weight of laurin lactam.

6. The polyamide blend moulding material according to any one of the preceding claims, **characterized in that** the at least one polyamide of component (C) having an average of a maximum of 6 C atoms per monomeric unit is selected from a group comprising the polyamides PA 6, PA 4 and PA 66.

7. The polyamide blend moulding material according to claim 1, **characterized in that** the polyamide blend fraction consists of the following polyamides:
(A) 25 to 50% by weight of PA 610;
(B) 10 to 20% by weight of PA MACMI/MACMT/12, and
(C) 5 to 10% by weight of PA 6.

8. The polyamide blend moulding material according to any one of the preceding claims, **characterized in that** the polyamide elastomer of component (D) with hard segments on the basis of lactam and/or amino-carboxylic acid is selected from the group of polyether amides, polyester ether amides and/or polyester amides, wherein the hard segments are polyamide units made up of PA 6, PA 11 or PA 12 segments.

9. The polyamide blend moulding material according to any one of the preceding claims, **characterized in that** the non-polyamide elastomer of component (E) is selected from a group comprising ethylene-a-olefin copolymers, ethylene-C₃₋₁₂-α-olefin copolymers and ethylene-C₃₋₁₂-α-olefin with an unconjugated diene, NBR (acrylonitrile butadiene rubber) and acrylate.

10. The polyamide blend moulding material according to claim 9, **characterized in that** the ethylene-α-olefin-copolymer is an EP (ethylene propylene rubber) elastomer and/or EPDM (ethylene propylene diene rubber) elastomer, wherein the olefin of the ethylene-C₃₋₁₂-α-olefin copolymer is selected from the group propene, 1-butene, 1-pentene, 1-hexene, 1-octene, 1-decene and/or 1-dodecene, and wherein the unconjugated diene is selected from the group bicyclo(2.2.1)heptadiene, hexadiene-1.4, dicyclopentadiene and 5-ethylidene norbornene.

11. The polyamide blend moulding material according to claim 9, **characterized in that** the ethylene-α-olefin copolymers are a mixture of ethylene propylene copolymer and ethylene butylene copolymer grafted with maleic acid anhydride.

12. The polyamide blend moulding material according to any one of the preceding claims, **characterized in that** a filler is admixed to the blend which is selected from a group comprising fibres and organically modified layered silicates, wherein the fibres are formed as glass fibres, wherein up to 20% by weight of glass fibres are mixed into the polyamide blend moulding material, and wherein the organically modified layered silicates are selected from a group comprising mica, smectites and vermiculite, wherein up to 15% by weight of organically modified layered silicates are mixed into the polyamide blend moulding material.

13. A method of producing a polyamide blend moulding material according to any one of claims 1 to 12, **characterized in that** each polyamide of the components (A,B,C) of the polyamide blend fraction and the polyamide elastomer of the impact-resistant component (D) is produced in a classic polymerization autoclave at a total pressure which is 300 mbar or higher.

14. A moulded part, made of a polyamide blend moulding material, according to any one of claims 1 to 12, **characterized in that** this moulded part has a modulus of elasticity of at most 1400 MPa at a temperature of -30°C.

15. The moulded part, made of a polyamide blend moulding material, according to any one of claims 1 to 12, **characterized in that** this moulded part has a modulus of elasticity of at most 2400 MPa, preferably of at most 2000 MPa and particularly preferably of at most 1950 MPa at a temperature of -40°C.

16. The moulded part, made of a polyamide blend moulding material, according to any one of claims 1 to 12, **characterized in that** this moulded part has a modulus of elasticity of at most 180 MPa, preferably of at most 150 MPa, particularly preferably of at most 140 MPa at a temperature of +120°C.

17. The moulded part according to any one of claims 14 to 16, **characterized in that** it is configured as a pipe which is selected from a group comprising lines in or on motor vehicles and lines in or on immobile structures, wherein the pipe is preferably configured as a single-layer extruded pipe.

18. The moulded part according to claim 17, **characterized in that** the lines in or on motor vehicles comprise brake booster, cooling-water, air-intake, heating, venting, hydraulic and pneumatic brake lines.

19. The moulded part according to claim 17, **characterized in that** the lines in or on immobile structures comprise waste-water, rainwater, pneumatic-post, heating-oil, long-distance heating, cold-water, hot-water and drinking-water lines as well as protective pipes for electric lines.

20. The moulded part according to any one of claims 14 to 18, **characterized in that** it is configured as an injection-moulded brake servo, fuel filter or air filter component.

## Revendications

1. Matière à mouler contenant un mélange de polyamide comprenant une part de mélange de polyamide et au moins un composant résistant aux chocs, **caractérisée en ce que** la part de mélange de polyamide se compose des polyamides suivants :
(A) de 25 à 50 % en poids au moins d'un polyamide semi-cristallin avec une enthalpie de fusion > 40 J/g mesurée par calorimétrie différentielle à balayage (DSC), et avec en moyenne au moins 8 atomes C par unité monomère, choisi à partir du groupe composé de PA 610, PA 612, PA 1010, PA 106, PA 106/10T, PA 614 et PA 618 ;
(B) de 10 à 20 % en poids au moins d'un polyamide amorphe et/ou micro-cristallin, le polyamide micro-cristallin présentant une enthalpie de fusion comprise entre 4 et 40 J/g, mesurée par calorimétrie différentielle à balayage (DSC) ; et
(C) de 5 à 10 % en poids au moins d'un polyamide avec en moyenne 6 atomes C maximum par unité monomère ;
et **en ce que** le composant résistant aux chocs comprend :
(D) de 10 à 40 % en poids d'un élastomère polyamide qui est composé de segments durs et de segments souples, les segments durs étant à base de lactames et/ou d'acides aminocarboxyliques, et les segments souples étant à base d'unités polyéther et/ou polyester ; et
(E) de 0 à 35 % en poids d'un élastomère non polyamide,
toutes les données exprimées en pourcentage en poids se rapportant au poids total de la matière à mouler contenant un mélange de polyamide et donnant au total, éventuellement complétées avec des additifs courants, 100 % en poids.

2. Matière à mouler contenant un mélange de polyamide selon la revendication 1, **caractérisée en ce que** le polyamide micro-cristallin du composant (B) présente une enthalpie de fusion comprise entre 4 et 25 J/g.

3. Matière à mouler contenant un mélange de polyamide selon l'une des revendications 1 ou 2, **caractérisée en ce que** les élastomères polyamides du composant (D) sont choisis à partir du groupe des polyétheramides, des polyesteréthéramides et/ou des polyesteramides.

4. Matière à mouler contenant un mélange de polyamide selon l'une des revendications précédentes, **caractérisée en ce que** le au moins un polyamide amorphe et/ou micro-cristallin du composant (B) est choisi à partir d'un groupe comprenant les polyamides PA MACMI/MACMT/12, PA MACMI/12 et PA PACM12, PA 6I/6T, poly(triméthylhexaméthylène-diamine-téréphtalate), PA NDT/INDT, PA 6I/MACMI/MACMT, PA 6I/6T/MACMI, PA MACM12/PACM12, PA MACMI/MACM36, PA 6I ; PA 12/PACMI, PA12/MACMI, PA 12/MACMT, PA 6I/PACMT, PA 6/6I et PA 6/IPDT; PA MACM12, PA MACM18, PA PACM12, PA MACM12/PACM12, PA MACM18/PACM18, PA 6I/PACMI/PACMT; PA 6I/MXDI ; ainsi qu'un mélange quelconque de ces polyamides.

5. Matière à mouler contenant un mélange de polyamide selon la revendication 4, **caractérisée en ce que** le polyamide PA MACMI/MACMT/12 est formé à partir de :
- 30 à 45 parties en poids de MACMI,
- 30 à 45 parties en poids de MACMT, et
- 10 à 40 parties en poids de laurine-lactame.

6. Matière à mouler contenant un mélange de polyamide selon l'une des revendications précédentes, **caractérisée en ce que** le au moins un polyamide du composant (C) avec en moyenne 6 atomes C au maximum par unité monomère est choisi à partir d'un groupe comprenant les polyamides PA 6, PA 46 et PA 66.

7. Matière à mouler contenant un mélange de polyamide selon la revendication 1, **caractérisée en ce que** la part de mélange de polyamide est composée des polyamides suivants :
(A) de 25 à 50 % en poids de PA 610 ;
(B) de 10 à 20 % en poids de PA MACMI/MACMT/12 ; et
(C) de 5 à 10 % en poids de PA 6.

8. Matière à mouler contenant un mélange de polyamide selon l'une des revendications précédentes, **caractérisée en ce que** l'élastomère polyamide du composant (D) avec des segments durs à base de lactame et/ou d'acides aminocarboxyliques est choisi à partir du groupe des polyétheramides, polyesteréthéramides et/ou des polyesteramides, les segments durs étant des unités polyamides de segments PA 6, PA 11 ou PA 12.

9. Matière à mouler contenant un mélange de polyamide selon l'une des revendications précédentes, **caractérisée en ce que** l'élastomère non polyamide du composant (E) est choisi à partir d'un groupe comprenant les copolymères éthylène-α-oléfine, les copolymères éthylène-C₃₋₁₂-α-oléfine et éthylène-C₃₋₁₂-α-oléfine avec un diène non conjugué, du NBR (caoutchouc acrylonitrile butadiène) et de l'acrylate.

10. Matière à mouler contenant un mélange de polyamide selon la revendication 9, **caractérisée en ce que** le copolymère éthylène-α-oléfine est un élastomère EP (caoutchouc d'éthylène-propylène) et/ou un élastomère EPDM (caoutchouc d'éthylène-propylène-diène), l'oléfine du copolymère éthylène-C₃₋₁₂-α-oléfine étant choisie à partir du groupe propène, 1-butène, 1-pentène, 1-hexène, 1-octène, 1-décène et/ou 1-dodécène, et le diène non conjugué étant choisi à partir du groupe bicyclo(2.2.1)heptadiène, hexadiène-1.4, dicyclopentadiène et 5-éthylidène norbornène.

11. Matière à mouler contenant un mélange de polyamide selon la revendication 9, **caractérisée en ce que** les copolymères éthylène-α-oléfine sont un mélange greffé d'anhydride maléique du copolymère éthylène-propylène et du copolymère éthylène-butylène.

12. Matière à mouler contenant un mélange de polyamide selon l'une des revendications précédentes, **caractérisée en ce qu'**il est ajouté au mélange une matière de remplissage qui est choisie à partir d'un groupe comprenant des fibres et des silicates en couches modifiés de manière organique, les fibres étant réalisées sous la forme de fibres de verre, la matière à mouler contenant un mélange de polyamide étant mélangée jusqu'à 20 % en poids aux fibres de verre, et les silicates en couches modifiés de manière organique étant choisis à partir d'un groupe comprenant du mica, de la smectite et de la vermiculite, la matière à mouler contenant un mélange de polyamide étant mélangée jusqu'à 15 % en poids à des silicates en couches modifiés de manière organique.

13. Procédé pour fabriquer une matière à mouler contenant un mélange de polyamide selon l'une des revendications 1 à 12, **caractérisé en ce que** chaque polyamide des composants (A, B, C) de la part de mélange de polyamide ainsi que l'élastomère polyamide du composant résistant aux chocs (D) est fabriqué dans une autoclave de polymérisation classique à une pression totale égale à 300 mbar ou supérieure.

14. Pièce moulée fabriquée à partir d'une matière à mouler contenant un mélange de polyamide selon l'une des revendications 1 à 12, **caractérisée en ce que** cette pièce moulée présente à une température de -30 °C un module d'élasticité de maximum 1400 MPa.

15. Pièce moulée fabriquée à partir d'une matière à mouler contenant un mélange de polyamide selon l'une des revendications 1 à 12, **caractérisée en ce que** cette pièce moulée présente à une température de -40 °C un module d'élasticité de maximum 2400 MPa, de préférence de maximum 2000 MPa, et de façon particulièrement préférée de maximum 1950 MPa.

16. Pièce moulée fabriquée à partir d'une matière à mouler contenant un mélange de polyamide selon l'une des revendications 1 à 12, **caractérisée en ce que** cette pièce moulée présente à une température de +120 °C un module d'élasticité de maximum 180 MPa, de préférence de maximum 150 MPa, de façon particulièrement préférée de maximum 140 MPa.

17. Pièce moulée selon l'une des revendications 14 à 16, **caractérisée en ce qu'**elle est réalisée sous la forme d'un tube qui est choisi à partir d'un groupe comprenant les conduites dans ou sur les véhicules à moteur et les conduites dans ou sur les constructions immobiles, le tube étant de préférence réalisé sous la forme d'un tube extrudé à une couche.

18. Pièce moulée selon la revendication 17, **caractérisée en ce que** les conduites dans ou sur les véhicules à moteur comprennent les tuyaux de servofrein, les conduites d'eau de refroidissement, d'admission d'air, de chauffage, de ventilation, hydrauliques et de frein à air comprimé.

19. Pièce moulée selon la revendication 17, **caractérisée en ce que** les conduites dans ou sur les constructions immobiles comprennent les conduites d'évacuation des eaux usées, les conduites d'eaux pluviales, de tubes pneumatiques, de fuel de chauffage, de chauffage à distance, d'eau froide, d'eau chaude et d'eau potable, ainsi que des gaines de protection pour les lignes électriques.

20. Pièce moulée selon l'une des revendications 14 à 18, **caractérisée en ce qu'**elle est réalisée sous la forme d'un élément de servofrein, de filtre à carburant ou de filtre à air moulé par injection.
